# EUROPÄISCHE PATENTSCHRIFT

(11) **EP 1 364 260 B1**
(45) Veröffentlichungstag und Bekanntmachung des Hinweises auf die Patenterteilung: **19.04.2006**
(21) Anmeldenummer: 02712754.7
(22) Anmeldetag: 07.02.2002
(51) Int. Cl.: G05B 19/409, G09B 9/32, G02B 27/01

(54) **VERKNÜPFTE INFORMATION ÜBER DIE OKULARE WEITERVERFOLGUNG INNERHALB EINES SYSTEMS VON VERSTÄRKTER REALITÄT**
COMBINED EYE TRACKING INFORMATION IN AN AUGMENTED REALITY SYSTEM
INFORMATION DE POURSUITE OCULAIRE COMBINEE DANS UN SYSTEME A REALITE AMPLIFIEE

(30) Priorität: 20.02.2001 DE 10108064
(43) Veröffentlichungstag der Anmeldung: 26.11.2003
(73) Patentinhaber: SIEMENS AKTIENGESELLSCHAFT, 80333 München (DE)
(72) Erfinder: MORITZ, Soeren, 91353 Wimmelbach (DE)
(86) Internationale Anmeldenummer: PCT/DE2002/000453
(87) Internationale Veröffentlichungsnummer: WO 2002/067067

(56) Entgegenhaltungen:
- WO-A-00/52537
- WO-A-00/55714
- WO-A-92/14982
- DE-A- 4 119 803
- US-A- 4 303 394
- US-A- 4 634 384
- US-A- 5 671 158

## Beschreibung

Die Erfindung betrifft ein System sowie ein Verfahren innerhalb eines Augmented-Reality-Systems zur Verknüpfung von Eye-Tracking-Informationen mit Video- und/oder Audioinformationen, sowie ein Computerprogrammprodukt zur Durchführung des Verfahrens.

Ein derartiges System und Verfahren kommt beispielsweise im Bereich der Automatisierungstechnik, bei Produktions- und Werkzeugmaschinen, bei Diagnose-/Serviceunterstützungssystemen sowie für komplexe Komponenten, Geräte und Systeme, wie beispielsweise Fahrzeuge und industrielle Maschinen und Anlagen zum Einsatz.

Aus der WO 00/52537 ist ein System und Verfahren zur Nutzung von Expertenwissen an einem entfernten Ort bekannt, bei dem von einem ersten Ort mit einem Facharbeiter mittels Augmented-Reality-Mitteln an einen entfernten Experten an einem zweiten Ort Informationsdaten, beispielsweise in Form von Videobildern, übermittelt werden und bei dem der entfernte Experte an den Facharbeiter am ersten Ort zusätzliche Informationsdaten in Form von Augmented-Reality-Informationen übermittelt.

Aus der europäischen Patentanmeldung EP 0 865 207 ist ein Telekommunikationssystem bekannt, bei dem das gegenseitige Verstehen zwischen einem Arbeiter vor Ort und einem entfernten Experten vereinfacht wird. Hierbei werden von dem Arbeiter vor Ort zu dem Experten Bilddaten in Echtzeit übertragen und umgekehrt Instruktionen vom Experten für den Arbeiter bereitgestellt. Die zu übertragenden Bilddaten werden in dem System stabilisiert.

Der Erfindung liegt die Aufgabe zugrunde, ein System und ein Verfahren anzugeben, das in einem Augmented-Reality-System die Möglichkeit der Zuordnung von Informationen zu realen Objekten verbessert.

Diese Aufgabe wird gelöst durch ein System mit den in Anspruch 1 angegebenen Merkmalen.

Diese Aufgabe wird weiterhin gelöst durch ein Verfahren mit den in Anspruch 14 angegebenen Merkmalen.

Das erfindungsgemäße System erlaubt die Verknüpfung von über voneinander unabhängige Wege gewonnene Informationen. Dazu wird die Augenposition eines Anwenders mit einem handelsüblichen Eye-Tracking-System erfasst. Dieses erzeugt im Ergebnis eine Ortsinformation über die Augenposition (auch als Eye-Tracking-Information bezeichnet), die z.B. in Form von kartesischen Koordinaten oder Polarkoordinaten vorliegt. Des Weiteren wird mit einer Bilderfassungseinheit, z.B. mit einer Videokamera, ein Bild der Umgebung des Anwenders erfasst. Diese Bilderfassungseinheit ist vorteilhafterweise am Kopf des Anwenders fixiert, so dass sie in Relation zu den Augen des Anwenders ruht. Der Blickwinkel der Bilderfassungseinheit überschneidet sich mit dem Blickwinkel des Anwenders, im Idealfall so, dass das komplette Sichtfeld des Anwenders von der Bilderfassungseinheit erfasst wird. Die von Bilderfassungseinheit und Eye-Tracking-System gelieferten Daten werden im Annotation-System miteinander verknüpft. Das Annotation-System ist beispielsweise in einem mobilen, vom Anwender mitgeführten Rechner realisiert. Denkbar wäre auch die drahtlose Übertragung der Daten an ein stationäres Rechnersystem. Die vom Annotation-System verknüpften Daten können nun zur Weiterverarbeitung oder zur Archivierung an weitere Einheiten gesendet bzw. geleitet werden.

Eine besonders sinnvolle Erweiterung des Systems ist eine Schallerfassungseinheit zur Erfassung von Schallinformationen und zur Umsetzung dieser Schallinformationen in Audiosignale. In diesem Fall dient das Annotation-System zur Verknüpfung der Ortsinformationen über die Augenposition mit den Videosignalen und mit den Audiosignalen und zur Erzeugung von Daten als Ergebnis dieser Verknüpfung. Die visuellen Daten werden so um Audiodaten erweitert. Prinzipiell ist das System zur Verknüpfung von beliebigen Video- und Audiodaten vorgesehen, vorteilhafterweise beruhen diese Daten jedoch auf zeitlich parallel erfassten Bild-, Orts- und Schallinformationen. Das System verknüpft dann Daten, die auf Informationen beruhen, welche auch in der Realität miteinander verknüpft sind, sowohl räumlich als auch zeitlich. Diese Verknüpfung konserviert somit einen Zusammenhang, der durch getrennte Erfassungswege eigentlich verloren gegangen ist.

Um eine bedarfsorientierte Nutzung des Systems zu ermöglichen erfolgt vorteilhafterweise eine Aktivierung des Annotation-Systems in Abhängigkeit von einem Ergebnis einer Auswertung der erfassten Schallinformationen. Nur wenn eine Schallinformation vorliegt, z.B. wenn der Anwender etwas sagt, wird die Annotation aktiviert. Andernfalls befindet sich das System im Stand-by-Modus. Diese Form der Ausgestaltung bietet sich an, wenn das System zur Dokumentation, zur Fehlerbeschreibung oder zur Erläuterung eines Objekts im Sichtfeld des Anwenders eingesetzt wird. Die Aktivierung des Annotation-Systems könnte auch durch anders geartete Signale erfolgen, z.B. durch einen Tastendruck, durch Mimik oder Gestik des Anwenders.

Die vom System aufgezeichneten Informationen werden zur leichteren Weiterverarbeitung vorteilhafterweise in Digitalinformationen umgewandelt, die Schallinformationen in einen digitalen Audiostream, die Bildinformationen in einen digitalen Videostream. Nach der Verknüpfung dieser Informationen im Annotation-System liegen die Daten als Datenstream bzw. als Datei vor. Diese stehen zur Archivierung oder zur direkten Weiterverarbeitung zur Verfügung. In einer vorteilhaften Ausgestaltung der Erfindung werden die verknüpften Daten auf einem Remote-System, d. h. einem entfernten System, wiedergegeben. Einem Nutzer des Remote-Systems, einem Remote-Experten, liegen dann sämtliche relevanten Informationen vor, um die Situation vor Ort beim Anwender zu erfassen. Der Remote-Experte sieht, was der Anwender sieht, er hört, was der Anwender sagt und er erkennt sogar, was der Anwender gerade fixiert. Die Ortsinformation über die Augenposition liegt dabei vorteilhafterweise in Form eines animierten Graphikobjekts vor.

Im Folgenden wird die Erfindung anhand des in den Figuren dargestellten Ausführungsbeispiels näher beschrieben und erläutert.

Es zeigen:
- FIG 1: ein Blockschaltbild eines Ausführungsbeispiels eines Systems zur Verknüpfung von Eye-Tracking-Informationen mit Video- und/oder Audioinformationen,
- FIG 2: ein typisches Anwendungsszenario dieses Systems und
- FIG 3: eine Ausführung des Remote-Systems.

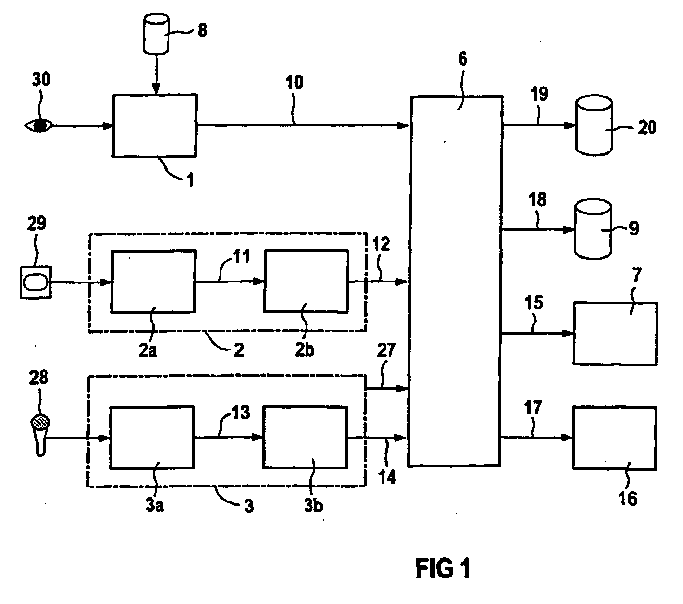

FIG 1 zeigt ein Blockschaltbild eines Ausführungsbeispiels des Systems zur Verknüpfung von Eye-Tracking-Informationen mit Video- und/oder Audioinformationen innerhalb eines Augmented-Reality-Systems. Zentraler Bestandteil des Systems ist ein Annotation-System 6, welches beispielsweise in einem mobilen Rechner realisiert ist. Das Annotation-System 6 ist eingangsseitig verbunden mit einem Eye-Tracking-System 1, einer Bilderfassungseinheit 2 und einer Tonerfassungseinheit 3. Das Eye-Tracking-System 1 erhält Kalibrierungsinformationen 8 und erfasst eine Augenposition 30. Es gibt eine Ortsinformation 10 an das Annotation-System 6 weiter. Die Bilderfassungseinheit 2 enthält eine Videokamera 2a, die Bildinformationen 29 erfasst und analoge Bilddaten 11 an die Bildverarbeitungseinheit 2b weitergibt. Diese übermittelt einen digitalen Videostream 12 an das Annotation-System 6. In der Tonerfassungseinheit 3 sind ein Mikrofon 3a und eine Audio-Verarbeitungseinheit 3b enthalten. Das Mikrofon 3a erfasst Toninformationen 28 und gibt analoge Audiodaten 13 an die Audio-Verarbeitungseinheit 3b weiter, welche einen digitalen Audiostream 14 an das Annotation-System 6 gibt. Zusätzlich wird durch die Tonerfassungseinheit 3 ein Ergebnis einer Auswertung 27 an das Annotation-System 6 übermittelt. Die im Annotation-System 6 verknüpften Informationen werden im Beispiel entweder als Datei 19 oder als Datenstream 15, 17, 18 weitergegeben. Dem Annotation-System 6 sind eine Archivierungseinheit 20, eine Archivierungseinheit 9, ein Remote-System 7 und eine Wiedergabeeinheit 16 nachgeschaltet.

Im Folgenden soll anhand der FIG 1 die prinzipielle Funktionsweise des Systems erläutert werden. Im Ausgangszustand befindet sich das Annotation-System 6 in einer Art Stand-by-Modus. Erst bei Vorliegen eines Startsignals 27 wird das Annotation-System 6 aktiviert. Das Startsignal 27 wird durch die Tonerfassungseinheit 3 generiert. Im Beispielfall soll das Annotation-System 6 durch einen Sprachbefehl 28 gestartet werden. Dazu wird der Sprachbefehl 28 vom Mikrofon 3a aufgenommen und als analoges Audiosignal 13 an die Audio-Verarbeitungseinheit 3b weitergegeben. Wurde die Audio-Verarbeitungseinheit 3b aktiviert, so wertet sie das Audiosignal 13 aus und entscheidet anhand bestimmter Kriterien, ob ein Sprachbefehl vorlag oder nicht und gibt in Abhängigkeit davon ein Startsignal 27 an das Annotation-System 6 weiter. Somit wird im Falle des Vorliegens eines entsprechenden Sprachbefehls 28 das Annotation-System 6 aktiviert. Danach wird das Audiosignal 13 in einen Audiostream 14 umgewandelt und an das Annotation-System 6 gegeben. Das aktivierte Annotation-System 6 verknüpft nun die Ortsinformation 10, den digitalen Videostream 12 und den digitalen Audiostream 14. Das Eye-Tracking-System 1 wurde zuvor mit Hilfe einer Kalibrierungsinformation 8 kalibriert. Es dient zur Erfassung einer Augenposition 30 und zur Erzeugung einer entsprechenden Ortsinformation 10 über diese Augenposition 30. Die Ortsinformation 10 wird z. B. in Form von kartesischen Koordinaten oder Polarkoordinaten an das Annotation-System 6 gegeben. Diese Koordinaten liegen in einem Koordinatensystem, welches relativ zum Kopf des Anwenders 26 und damit auch relativ zur Videokamera 2a ruht. Zeitlich parallel erfasst die Bilderfassungseinheit 2 durch die Videokamera 2a eine Bildinformation 29 und gibt einen dementsprechenden digitalen Videostream 12 an das Annotation-System 6. Außerdem werden, wiederum zeitlich parallel, Sprachinformationen 28 durch die Schallerfassungseinheit 3 erfasst und als digitaler Audiostream 14 an das Annotation-System 6 gegeben. Das Annotation-System 6 verknüpft nun diese zeitlich parallel ermittelten Informationen, es fasst die aktuell ermittelte Augenposition 30 des kalibrierten Eye-Tracking-Systems 1, den Audiostream 14 und den digitalisierten Videostream 12 zusammen. Als Ergebnis dieser Verknüpfung werden eine oder mehrere Dateien 19 erzeugt, z. B. mit Hilfe des SMIL-Formats und einzelner Dokumente oder im MPEG4-Format. Diese Dateien 19 werden an eine Archivierungseinheit 20 weitergegeben. Die verknüpften Informationen können jedoch auch als Datenstream, z. B. im MPEG7-Format, an weitere Systeme gesendet bzw. geleitet werden. Dieser Datenstream kann nun ebenfalls in einer Archivierungseinheit 9 archiviert werden oder zur Anzeige auf einem Remote-System 7 bzw. einer Wiedergabeeinheit 16 genutzt werden. Wird von der Audio-Verarbeitungseinheit 3b erkannt, dass keine Sprachaufzeichnung erfolgt, wird das Annotation-System 6 deaktiviert.

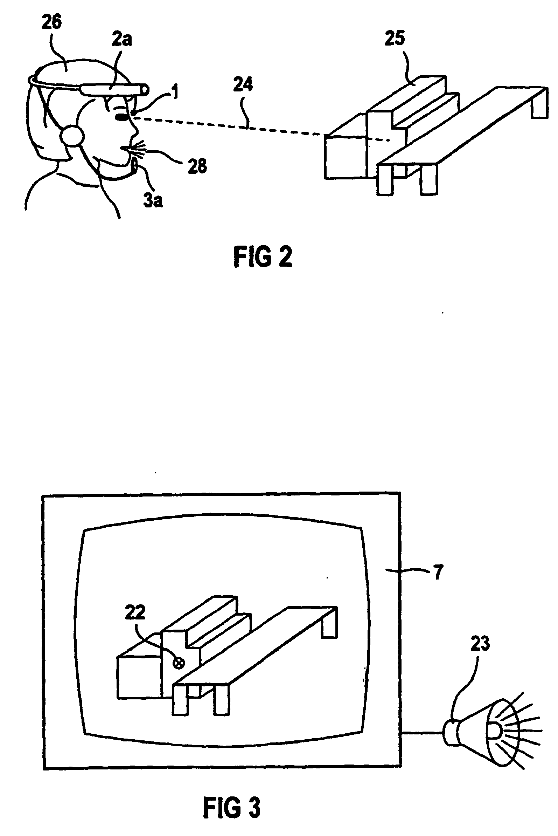

FIG 2 zeigt einen Anwender 26 in einem typischen Szenario zusammen mit einem Objekt 25 in seiner Umgebung. Der Anwender 26 trägt eine Videokamera 2a, die an seinem Kopf befestigt ist, und ein Eye-Tracking-System 1, das die Bewegung seiner Augen verfolgt. Er gibt Sprachbefehle 28 an das Mikrofon 3a eines Head-Sets. Mit dem Bezugszeichen 24 ist die Blickrichtung des Anwenders 26 gekennzeichnet. Er fixiert einen Punkt am Umgebungsobjekt 25.

Der Anwender 26 sei beispielsweise ein Techniker, der vor Ort eine Werkzeugmaschine 25 inspiziert. Er entdeckt eine schadhafte Komponente an der Werkzeugmaschine 25, kann jedoch alleine nicht beurteilen, wie dieser Schaden zu bewerten ist. Deshalb nimmt er Kontakt zu einem Remote-Experten auf, welcher in der Lage ist, den Fehler zu beurteilen. Um diesem Remote-Experten die nötigen Informationen übermitteln zu können, aktiviert der Anwender 26 das von ihm mitgeführte Annotation-System 6, indem er einen entsprechenden Sprachbefehl 28 über das Head-Set-Mikrofon 3a abgibt. Mit der Videokamera 2a am Kopf des Anwenders 26 wird das Blickfeld des Anwenders erfasst. Zusätzlich wird über das Eye-Tracking-System 1 die Blickrichtung des Anwenders aufgenommen und die daraus gewonnene Information mit dem Videosignal der Kamera 2a verknüpft. Da die verknüpften Daten an ein Display in einem Remote-System 7 übermittelt werden, kann der Remote-Experte sowohl das sehen, was der Anwender 26 sieht, als auch erkennen, welchen Punkt der Werkzeugmaschine 25 der Anwender 26 im Moment fixiert. Mit der zusammen mit den Bildinformationen verknüpften Sprachinformationen 28 kann der Anwender 26 dem Remote-Experten weitere Informationen geben. Die Verknüpfung der Informationen und deren Übertragung endet, wenn der Anwender 26 einen entsprechenden Befehl 28 abgibt oder wenn längere Zeit keine Sprachinformation 28 empfangen wird.

FIG 3 zeigt einen Bildschirm, auf welchem die Werkzeugmaschine 25 und das Grafikobjekt 22 dargestellt sind, und Lautsprecher 23 des Remote-Systems 7. Der oben genannte Remote-Experte erkennt auf seinem Bildschirm sowohl die Werkzeugmaschine 25, und damit das Sichtfeld des Anwenders 26, als auch den Blickfokus des Anwenders 26. Hierzu wurde die Augenposition 30 zuvor beispielsweise in ein animiertes Graphikobjekt 22 (z.B. Kreis oder Pfeil) umgewandelt und zeitlich synchronisiert mit dem Audio- und Videostream (14, 12) aufgezeichnet. Die in den Verknüpfungsdaten eingebundenen akustischen Informationen 28 werden im Remote-System 7 über den Lautsprecher 23 wiedergegeben.

Der besondere Nutzen des beschriebenen Systems liegt darin, dass Anmerkungen zum aktuellen Sichtfeld bzw. zur aktuellen Arbeitssituation des Anwenders 26 nach der Aktivierung des Annotation-Systems 6 ohne weitere Bedienung des Anwenders 26 aufgezeichnet werden können, um sie zu archivieren oder mit Hilfe eines Übertragungssystems z.B. an einen Remote Experten zu übertragen. Der entscheidende Vorteil gegenüber herkömmlichen Systemen besteht darin, dass zusätzlich der Fokus bzw. die Blickrichtung 24 des Anwenders 26 sichtbar gemacht wird. Vielfältige Anwendungsgebiete dieses Systems sind denkbar, so könnte es zur Dokumentationserstellung oder auch zur selbständigen Erweiterung einer Dokumentation durch Fachkräfte genutzt werden, ein Fachmann könnte mit Hilfe des Systems die Funktion einer Baugruppe erläutern, ein Servicetechniker ein Fehlerbild beschreiben.

Zusammenfassend betrifft die Erfindung somit ein System sowie ein Verfahren innerhalb eines Augmented-Reality-Systems zur Verknüpfung von Eye-Tracking-Informationen mit Video- und/oder Audioinformationen, welches die Möglichkeit der Zuordnung von Informationen zu realen Objekten verbessert. Das System besteht aus einem Eye-Tracking-System 1 zur Erfassung einer Augenposition 30 und zur Erzeugung einer Ortsinformation 10 über die Augenposition 30, einer Bilderfassungseinheit 2 zur Erfassung von Bildinformationen 29 und zur Umsetzung dieser Bildinformationen 29 in Videosignale 12, einem Annotation-System 6 zur Verknüpfung der Ortsinformationen 10 über die Augenposition 30 mit den Videosignalen 12 und zur Erzeugung von Daten 14, 15, 17, 18 als Ergebnis dieser Verknüpfung und einem oder mehreren Systemen 7, 9, 20, 16 zur Weiterverarbeitung und/oder Archivierung der Daten 14, 15, 17, 18.

## Patentansprüche

1. System, bestehend aus
- einer das Sichtfeld eines Anwenders erfassenden Bilderfassungseinheit (2) zur Erfassung von Bildinformationen (29) und zur Umsetzung dieser Bildinformationen (29) in Videosignale (12),
- einem Eye-Tracking-System (1) zur Erfassung einer Augenposition (30) des Anwenders und zur Erzeugung einer die Blickrichtung des Anwenders angebenden Ortsinformation (10) über die Augenposition (30), wobei die Ortsinformation (10) in Form von Koordinaten eines relativ zur Bilderfassungseinheit (2) ruhenden Koordinatensystems angegeben wird und wobei die Ortsinformation (10) den vom Anwender fixierten Punkt im Sichtfeld der Bilderfassungseinheit (2) angibt,
**dadurch gekennzeichnet, dass** das System
- ein Annotation-System (6) zur Verknüpfung der Ortsinformationen (10) über die Augenposition (30) mit den Videosignalen (12) und zur Erzeugung von Daten (14,15,17,18) als Ergebnis dieser Verknüpfung, wobei ein Startsignal zur Aktivierung des Annotations-Systems vorgesehen ist, und
- ein oder mehrere Systeme (7,9,20,16) zur Weiterverarbeitung und/oder Archivierung der Daten (14,15,17,18), insbesondere zur Dokumentationserstellung aufweist.

2. System nach Anspruch 1, **dadurch gekennzeichnet, dass** eine Schallerfassungseinheit (3) zur Erfassung von Schallinformationen (28) und zur Umsetzung dieser Schallinformationen (28) in Audiosignale (14) vorgesehen ist und dass das Annotation-System (6) zur Verknüpfung der Ortsinformationen (10) über die Augenposition (30) mit den Videosignalen (12) und mit den Audiosignalen (14) und zur Erzeugung von Daten (14,15,17,18) als Ergebnis dieser Verknüpfung vorgesehen ist.

3. System nach Anspruch 1, **dadurch gekenn**z e i c h n e t , dass das Annotation-System (6) zur Verknüpfung der Ortsinformationen (10) über die Augenposition (30) mit den Videosignalen (12) vorgesehen ist, wobei die Ortsinformationen (10) über die Augenposition (30) auf einer erfassten Augenposition (30) und die Videosignale (12) auf zeitlich parallel erfassten Bildinformationen (29) beruhen.

4. System nach Anspruch 2, **dadurch gekennzeichnet, d**ass das Annotation-System (6) zur Verknüpfung der Ortsinformationen (10) über die Augenposition (30) mit den Videosignalen (12) und mit den Audiosignalen (14) vorgesehen ist, wobei die Ortsinformationen (10) über die Augenposition (30) auf einer erfassten Augenposition (30), die Videosignale (12) auf zeitlich parallel erfassten Bildinformationen (29) und die Audiosignale (14) auf zeitlich parallel erfassten Schallinformationen (28) beruhen.

5. System nach Anspruch 2 oder 4, **dadurch gekennzeichnet, dass** eine Aktivierung des Annotation-Systems (6) in Abhängigkeit von einem Ergebnis (27) einer Auswertung der erfassten Schallinformationen (28) vorgesehen ist.

6. System nach einem der Ansprüche 2, 4 oder 5, **dadurch gekennzeichnet, dass** die Schallerfassungseinheit (3) aus einer Schallaufnahmeeinheit (3a) zur Erfassung von Schallinformationen (28) und einer Audio-Verarbeitungseinheit (3b) zur Umsetzung dieser Schallinformationen (28) in einen digitalen Audiostream (14) besteht.

7. System nach einem der vorhergehenden Ansprüche, **dadurch gekennzeichnet, dass** die Bilderfassungseinheit (2) aus einer Bildaufnahmeeinheit (2a) zur Erfassung von Bildinformationen (29) und einer Bild-Verarbeitungseinheit (2b) zur Umsetzung dieser Bildinformationen (29) in einen digitalen Videostream (12) besteht.

8. System nach einem der vorhergehenden Ansprüche, **dadurch gekennzeichnet , dass** die Daten als erster, zweiter und/oder dritter Datenstream (15,17,18) und/oder als Dateien (19) vorliegen.

9. System nach Anspruch 8, **dadurch gekennzeichnet, dass** eine erste Archivierungseinheit (20) zur Archivierung der Dateien (19) vorgesehen ist.

10. System nach Anspruch 8 oder 9, **dadurch gekennzeichnet, dass** eine zweite Archivierungseinheit (9) zur Archivierung des dritten Datenstreams (18) vorgesehen ist.

11. System nach einem der Ansprüche 8, 9 oder 10, **dadurch gekennzeichnet, dass** ein Remote-System (7) zur Weiterverarbeitung, insbesondere zur Wiedergabe, des ersten Datenstreams (15) vorgesehen ist.

12. System nach einem der Ansprüche 8 bis 11, **dadurch gekennzeichnet, dass** eine Wiedergabeeinheit (16) zur Wiedergabe des zweiten Datenstreams (17) vorgesehen ist.

13. System nach einem der vorhergehenden Ansprüche, **dadurch gekennzeichnet, dass** die Ortsinformation (10) über die Augenposition (30) in Form eines animierten Graphikobjekts (22) vorliegt.

14. Verfahren zur Zuordnung von Informationen (10, 29) zu einer Augenposition (30), bei dem
- Bildinformationen (29) aus dem Sichtfeld eines Anwenders erfasst und in Videosignale (12) umgesetzt werden,
- mit Hilfe eines Eye-Tracking-Systems (1) die Augenposition (30) des Anwenders erfasst und eine die Blickrichtung des Anwenders angebende Ortsinformation (10) über die Augenposition (30) erzeugt wird, wobei die Ortsinformation (10) in Form von Koordinaten eines relativ zur Bilderfassungseinheit ruhenden Koordinatensystems angegeben wird und wobei die Ortsinformation (10) den vom Anwender fixierten Punkt im Sichtfeld der Bilderfassungseinheit angibt,
**dadurch gekennzeichnet, dass**
- in einem Annotation-System (6) die Ortsinformationen (10) über die Augenposition (30) mit den Videosignalen (12) verknüpft werden und Daten (14,15,17,18) als Ergebnis dieser Verknüpfung erzeugt werden, wobei das Annotations-System bei Vorliegen eines Startsignals aktiviert wird und
- die Daten (14,15,17,18) insbesondere zur Dokumentationserstellung archiviert und/oder weiterverarbeitet werden.

15. Verfahren nach Anspruch 14, **dadurch gekennzeichnet, dass** Schallinformationen (28) erfasst werden und in Audiosignale (14) umgesetzt werden und dass im Annotation-System (6) die Ortsinformationen (10) über die Augenposition (30) mit den Videosignalen (12) und mit den Audiosignalen (14) verknüpft werden und Daten (14,15,17,18) als Ergebnis dieser Verknüpfung erzeugt werden.

16. Verfahren nach Anspruch 14, **dadurch gekennzeichnet, dass** im Annotation-System (6) die Ortsinformationen (10) über die Augenposition (30) mit den Videosignalen (12) verknüpft werden, wobei die Ortsinformationen (10) über die Augenposition (30) auf einer erfassten Augenposition (30) und die Videosignale (12) auf zeitlich parallel erfassten Bildinformationen (29) beruhen.

17. Verfahren nach Anspruch 15, **dadurch gekennzeichnet, dass** im Annotation-System (6) die Ortsinformationen (10) über die Augenposition (30) mit den Videosignalen (12) und mit den Audiosignalen (14) verknüpft werden, wobei die Ortsinformationen (10) über die Augenposition (30) auf einer erfassten Augenposition (30), die Videosignale (12) auf zeitlich parallel erfassten Bildinformationen (29) und die Audiosignale (14) auf zeitlich parallel erfassten Schallinformationen (28) beruhen.

18. Verfahren nach Anspruch 15 oder 17, **dadurch gekennzeichnet, dass** die Verknüpfung der Ortsinformationen (10) über die Augenposition (30) mit den Videosignalen (12) und mit den Audiosignalen in Abhängigkeit von einem Ergebnis (27) einer Auswertung der erfassten Schallinformationen (28) erfolgt.

19. Verfahren nach einem der Ansprüche 15, 17 oder 18, **dadurch gekennzeichnet, dass** die Schallinformationen (28) durch eine Schallaufnahmeeinheit (3a) erfasst werden und durch eine Audio-Verarbeitungseinheit (3b) in einen digitalen Audiostream (14) umgesetzt werden.

20. Verfahren nach einem der Ansprüche 14 bis 19, **dadurch gekennzeichnet, dass** die Bildinformationen (29) durch eine Bildaufnahmeeinheit (2a) erfasst werden und durch eine Bild-Verarbeitungseinheit (2b) in einen digitalen Videostream (12) umgesetzt werden.

21. Verfahren nach einem der Ansprüche 14 bis 20, **dadurch gekennzeichnet, dass** die Daten als erster, zweiter und/oder dritter Datenstream (15,17,18) und/oder als Dateien (19) vorliegen.

22. Verfahren nach Anspruch 21, **dadurch gekennzeichnet, dass** die Dateien (19) in einer ersten Archivierungseinheit (20) archiviert werden.

23. Verfahren nach Anspruch 21 oder 22, **dadurch gekennzeichnet, dass** der dritte Datenstream (18) in einer zweiten Archivierungseinheit (9) archiviert wird.

24. Verfahren nach einem der Ansprüche 21, 22 oder 23, **dadurch gekennzeichnet, dass** der erste Datenstream (15) mit einem Remote-System (7) weiterverarbeitet, insbesondere wiedergegeben, wird.

25. Verfahren nach einem der Ansprüche 21 bis 24, **dadurch gekennzeichnet, dass** der zweite Datenstream (17) mit einer Wiedergabeeinheit (16) wiedergegeben wird.

26. Verfahren nach einem der Ansprüche 21 bis 25, **dadurch gekennzeichnet, dass** die Ortsinformation (10) über die Augenposition (30) in Form eines animierten Graphikobjekts (22) dargestellt wird.

## Claims

1. System, comprising:
- an image recording unit (2) encompassing the field of vision of a user and provided for recording image information (29) and converting said image information (29) into video signals (12),
- an eye-tracking system (1) for recording an eye position (30) of the user and for generating position information (10) indicating the line of vision of the user and relating to the eye position (30), wherein the position information (10) is specified in the form of coordinates of a coordinate system that is stationary relative to the image recording unit (2) and wherein the position information (10) indicates the point being stared at by the user in the field of vision of the image recording unit (2),
**characterised in that** the system has
- an annotation system (6) for combining the position information (10) relating to the eye position (30) with the video signals (12) and for generating data (14, 15, 17, 18) as the result of said combining, with a start signal for activating the annotation system being provided, and
- one or more systems (7, 9, 20, 16) for further processing and/or archiving of the data (14, 15, 17, 18), in particular for the production of documentation.

2. System according to claim 1, **characterised in that** a sound recording unit (3) is provided for recording sound information (28) and for converting said sound information (28) into audio signals (14) and that the annotation system (6) is provided for combining the position information (10) relating to the eye position (30) with the video signals (12) and the audio signals (14) and for generating data (14, 15, 17, 18) as the result of said combining.

3. System according to claim 1, **characterised in that** the annotation system (6) is provided for combining the position information (10) relating to the eye position (30) with the video signals (12), with the position information (10) relating to the eye position (30) being based on a recorded eye position (30) and the video signals (12) being based on image information (29) recorded simultaneously in parallel.

4. System according to claim 2, **characterised in that** the annotation system (6) is provided for combining the position information (10) relating to the eye position (30) with the video signals (12) and with the audio signals (14), with the position information (10) relating to the eye position (30) being based on a recorded eye position (30), the video signals (12) being based on image information (29) recorded simultaneously in parallel and the audio signals (14) being based on sound information (28) recorded simultaneously in parallel.

5. System according to claim 2 or 4, **characterised in that** the annotation system (6) is activated as a function of a result (27) of an analysis of the recorded sound information (28).

6. System according to one of the claims 2, 4 or 5, **characterised in that** the sound recording unit (3) comprises a sound receiving unit (3a) for recording sound information (28) and an audio processing unit (3b) for converting said sound information (28) into a digital audio stream (14).

7. System according to one of the preceding claims, **characterised in that** the image recording unit (2) comprises an image receiving unit (2a) for recording image information (29) and an image processing unit (2b) for converting said image information (29) into a digital video stream (12).

8. System according to one of the preceding claims, **characterised in that** the data is present in the form of a first, second and/or third data stream (15, 17, 18) and/or as data files (19).

9. System according to claim 8, **characterised in that** a first archiving unit (20) is provided for archiving the data files (19)

10. System according to claim 8 or 9, **characterised in that** a second archiving unit (9) is provided for archiving the third data stream (18).

11. System according to one of the claims 8, 9 or 10, **characterised in that** a remote system (7) is provided for further processing, more particularly for playing back, the first data stream (15).

12. System according to one of the claims 8 to 11, **characterised in that** a playback unit (16) is provided for playing back the second data stream (17).

13. System according to one of the preceding claims, **characterised in that** the position information (10) relating to the eye position (30) is present in the form of an animated graphic object (22).

14. Method for assigning information (10, 29) to an eye position (30), wherein
- image information (29) from the field of vision of a user is recorded and converted into video signals (12),
- the eye position (30) of the user is recorded with the aid of an eye-tracking system (1) and position information (10) indicating the line of vision of the user and relating to the eye position (30) is generated, with the position information (10) being specified in the form of coordinates of a coordinate system that is stationary relative to the image recording unit (2) and with the position information (10) indicating the point being stared at by the user in the field of vision of the image recording unit (2),
**characterised in that**
- in an annotation system (6) the position information (10) relating to the eye position (30) is combined with the video signals (12) and data (14, 15, 17, 18) is generated as the result of said combining, with the annotation system being activated when a start signal is present, and
- the data (14, 15, 17, 18) is archived and/or processed further, in particular for the production of documentation.

15. Method according to claim 14, **characterised in that** sound information (28) is recorded and converted into audio signals (14) and that in the annotation system (6) the position information (10) relating to the eye position (30) is combined with the video signals (12) and with the audio signals (14) and data (14, 15, 17, 18) is generated as the result of said combining.

16. Method according to claim 14 , **characterised in that** in the annotation system (6) the position information (10) relating to the eye position (30) is combined with the video signals (12), with the position information (10) relating to the eye position (30) being based on a recorded eye position (30) and the video signals (12) being based on image information (29) recorded simultaneously in parallel.

17. Method according to claim 15, **characterised in that** in the annotation system (6) the position information (10) relating to the eye position (30) is combined with the video signals (12) and the audio signals (14), with the position information (10) relating to the eye position (30) being based on a recorded eye position (30), the video signals (12) being based on image information (29) recorded simultaneously in parallel, and the audio signals (14) being based on sound information (28) recorded simultaneously in parallel.

18. Method according to claim 15 or 17, **characterised in that** the position information (10) relating to the eye position (30) is combined with the video signals (12) and with the audio signals as a function of a result (27) of an analysis of the recorded sound information (28).

19. Method according to one of the claims 15, 17 or 18, **characterised in that** the sound information (28) is recorded by a sound receiving unit (3a) and converted by an audio processing unit (3b) into a digital audio stream (14).

20. Method according to one of the claims 14 to 19, **characterised in that** the image information (29) is recorded by an image receiving unit (2a) and converted by an image processing unit (2b) into a digital video stream (12) .

21. Method according to one of the claims 14 to 20, **characterised in that** the data is present in the form of a first, second and/or third data stream (15, 17, 18) and/or as data files (19).

22. Method according to claim 21, **characterised in that** the data files (19) are archived in a first archiving unit (20).

23. Method according to claim 21 or 22, **characterised in that** the third data stream (18) is archived in a second archiving unit (9).

24. Method according to one of the claims 21, 22 or 23, **characterised in that** the first data stream (15) is processed further, in particular played back, by means of a remote system (7).

25. Method according to one of the claims 21 to 24, **characterised in that** the second data stream (17) is played back by means of a playback unit (16).

26. Method according to one of the claims 21 to 25, **characterised in that** the position information (10) relating to the eye position (30) is displayed in the form of an animated graphic object (22).

## Revendications

1. Système, constitué de
- une unité d'acquisition d'images (2) détectant le champ visuel d'un utilisateur pour acquérir des informations visuelles (29) et pour convertir ces informations visuelles (29) en signaux vidéo (12),
- un système de poursuite oculaire (1) pour détecter une position oculaire (30) de l'utilisateur et pour produire une information de localisation (10) concernant la position oculaire (30) et indiquant la direction du regard de l'utilisateur, l'information de localisation (10) étant donnée sous la forme de coordonnées d'un système de coordonnées basé sur l'unité d'acquisition d'images (2) et l'information de localisation (10) donnant le point fixé par l'utilisateur dans le champ visuel de l'unité d'acquisition d'images (2),
**caractérisé par le fait que** le système comporte :
- un système d'annotation (6) pour combiner les informations de localisation (10) concernant la position oculaire (30) aux signaux vidéo (12) et pour produire des données (14, 15, 17, 18) en résultat de cette combinaison, un signal d'activation étant prévu pour l'activation du système d'annotation, et
- un ou plusieurs systèmes (7, 9, 20, 16) pour la suite du traitement et/ou pour l'archivage des données (14, 15, 17, 18), notamment pour l'élaboration d'une documentation.

2. Système selon la revendication 1, **caractérisé par le fait qu'**une unité d'acquisition de sons (3) est prévue pour acquérir des informations acoustiques (28) et pour convertir ces informations acoustiques (28) en signaux audio (14) et que le système d'annotation (6) est prévu pour combiner les informations de localisation (10) concernant la position oculaire (30) aux signaux vidéo (12) et aux signaux audio (14) et pour produire des données (14, 15, 17, 18) en résultat de cette combinaison.

3. Système selon la revendication 1, **caractérisé par le fait que** le système d'annotation (6) est prévu pour combiner les informations de localisation (10) concernant la position oculaire (30) aux signaux vidéo (12), les informations de localisation (10) concernant la position oculaire (30) étant basées sur une position oculaire détectée (30) et les signaux vidéo (12) étant basés sur des informations visuelles (29) détectées parallèlement dans le temps.

4. Système selon la revendication 2, **caractérisé par le fait que** le système d'annotation (6) est prévu pour combiner les informations de localisation (10) concernant la position oculaire (30) aux signaux vidéo (12) et aux signaux audio (14), les informations de localisation (10) concernant la position oculaire (30) étant basées sur une position oculaire détectée (30), les signaux vidéo (12) étant basés sur des informations visuelles (29) détectées parallèlement dans le temps et les signaux audio (14) étant basés sur des informations acoustiques (28) détectées parallèlement dans le temps.

5. Système selon la revendication 2 ou 4, **caractérisé par le fait qu'**une activation du système d'annotation (6) est prévue en fonction d'un résultat (27) d'une évaluation des informations acoustiques détectées (28).

6. Système selon l'une des revendications 2, 4 ou 5, **caractérisé par le fait que** l'unité d'acquisition de sons (3) est constituée d'une unité d'enregistrement de sons (3a) pour acquérir des informations acoustiques (28) et d'une unité de traitement audio (3b) pour convertir ces informations acoustiques (28) en un flux audio numérique (14).

7. Système selon l'une des revendications précédentes, **caractérisé par le fait que** l'unité d'acquisition d'images (2) est constituée d'une unité d'enregistrement d'images (2a) pour acquérir des informations visuelles (29) et d'une unité de traitement vidéo (2b) pour convertir ces informations visuelles (29) en un flux vidéo numérique (12).

8. Système selon l'une des revendications précédentes, **caractérisé par le fait que** les données sont présentes sous forme de premier, deuxième et/ou troisième flux de données (15, 17, 18) et/ou sous forme de fichiers (19).

9. Système selon la revendication 8, **caractérisé par le fait qu'**une première unité d'archivage (20) est prévue pour archiver des fichiers (19).

10. Système selon la revendication 8 ou 9, **caractérisé par le fait qu'**une deuxième unité d'archivage (9) est prévue pour archiver le troisième flux de données (18).

11. Système selon l'une des revendications 8, 9 ou 10, **caractérisé par le fait qu'**un système distant (7) est prévu pour la suite du traitement, notamment pour la reproduction, du premier flux de données (15).

12. Système selon l'une des revendications 8 à 11, **caractérisé par le fait qu'**une unité de reproduction (16) est prévue pour la reproduction du deuxième flux de données (17).

13. Système selon l'une des revendications précédentes, **caractérisé par le fait que** les informations de localisation (10) concernant la position oculaire (30) sont présentes sous la forme d'un objet graphique animé (22).

14. Procédé d'association d'informations (10, 29) à une position oculaire (30), dans lequel :
- on acquiert des informations visuelles (29) dans le champ visuel d'un utilisateur et on les convertit en signaux vidéo (12),
- à l'aide d'un système de poursuite oculaire (1), on acquiert la position oculaire (30) de l'utilisateur et on produit une information de localisation (10) concernant la position oculaire (30) et indiquant la direction du regard de l'utilisateur, l'information de localisation (10) étant donnée sous la forme de coordonnées d'un système de coordonnées basé sur l'unité d'acquisition d'images et l'information de localisation (10) indiquant le point fixé par l'utilisateur dans le champ visuel de l'unité d'acquisition d'images,
**caractérisé par le fait que**
- dans un système d'annotation (6), on combine les informations de localisation (10) concernant la position oculaire (30) aux signaux vidéo (12) et on produit des données (14, 15, 17, 18) en résultat de cette combinaison, le système d'annotation étant activé en présence d'un signal d'activation, et
- on archive les données (14, 15, 17, 18) et/ou on poursuit leur traitement notamment pour l'élaboration d'une documentation.

15. Procédé selon la revendication 14, **caractérisé par le fait qu'**on acquiert des informations acoustiques (28) et on les convertit en signaux audio (14) et que, dans le système d'annotation (6), on combine les informations de localisation (10) concernant la position oculaire (30) aux signaux vidéo (12) et aux signaux audio (14) et on produit des données (14, 15, 17, 18) en résultat de cette combinaison.

16. Procédé selon la revendication 14, **caractérisé par le fait que**, dans le système d'annotation (6), on combine les informations de localisation (10) concernant la position oculaire (30) aux signaux vidéo (12), les informations de localisation (10) concernant la position oculaire (30) étant basées sur une position oculaire détectée (30) et les signaux vidéo (12) étant basés sur des informations visuelles (29) détectées parallèlement dans le temps.

17. Procédé selon la revendication 15, **caractérisé par le fait que**, dans le système d'annotation (6), on combine les informations de localisation (10) concernant la position oculaire (30) aux signaux vidéo (12) et aux signaux audio (14), les informations de localisation (10) concernant la position oculaire (30) étant basées sur une position oculaire détectée (30), les signaux vidéo (12) étant basés sur des informations visuelles (29) détectées parallèlement dans le temps et les signaux audio (14) étant basés sur des informations acoustiques (28) détectées parallèlement dans le temps.

18. Procédé selon la revendication 15 ou 17, **caractérisé par le fait que** la combinaison des informations de localisation (10) concernant la position oculaire (30) aux signaux vidéo (12) et aux signaux audio s'effectue en fonction d'un résultat (27) d'une évaluation des informations acoustiques détectées (28).

19. Procédé selon l'une des revendications 15, 17 ou 18, **caractérisé par le fait que** les informations acoustiques (28) sont acquises par une unité d'enregistrement de sons (3a) et sont converties par une unité de traitement audio (3b) en un flux audio numérique (14).

20. Procédé selon l'une des revendications 14 à 19, **caractérisé par le fait que** les informations visuelles (29) sont acquises par une unité d'enregistrement d'images (2a) et sont converties par une unité de traitement vidéo (2b) en un flux vidéo numérique (12).

21. Procédé selon l'une des revendications 14 à 20, **caractérisé par le fait que** les données sont présentes sous forme de premier, deuxième et/ou troisième flux de données (15, 17, 18) et/ou sous forme de fichiers (19).

22. Procédé selon la revendication 21, **caractérisé par le fait qu'**on archive les fichiers (19) dans une première unité d'archivage (20).

23. Procédé selon la revendication 21 ou 22, **caractérisé par le fait qu'**on archive le troisième flux de données (18) dans une deuxième unité d'archivage (9).

24. Procédé selon l'une des revendications 21, 22 ou 23, **caractérisé par le fait qu'**on poursuit le traitement du premier flux de données (15) avec un système distant (7) et notamment on le reproduit.

25. Procédé selon l'une des revendications 21 à 24, **caractérisé par le fait qu'**on reproduit le deuxième flux de données (17) avec une unité de reproduction (16).

26. Procédé selon l'une des revendications 21 à 25, **caractérisé par le fait qu'**on représente l'information de localisation (10) concernant la position oculaire (30) sous la forme d'un objet graphique animé (22).
